# EUROPEAN PATENT SPECIFICATION

(11) **EP 2 242 775 B1**
(45) Date of publication and mention of the grant of the patent: **26.10.2011**
(21) Application number: 09707172.4
(22) Date of filing: 03.02.2009
(51) Int. Cl.: C08F 4/646, C08F 4/654, C08F 10/00

(54) **CATALYST FOR THE POLYMERIZATION OF OLEFINS**
KATALYSATOR FÜR DIE POLYMERISIERUNG VON OLEFINEN
CATALYSEUR POUR LA POLYMÉRISATION D'OLÉFINES

(30) Priority: 07.02.2008 EP 08151158; 11.02.2008 US 65496
(43) Date of publication of application: 27.10.2010
(73) Proprietor: Basell Poliolefine Italia S.r.l., 20127 Milano (IT)
(72) Inventor: FUSHIMI, Masaki, 65760 Eschborn (DE)
(74) Representative: Giberti, Stefano
(86) International application number: PCT/EP2009/051185
(87) International publication number: WO 2009/098198

(56) References cited:
- JP-A- 63 210 105
- US-A- 4 250 285
- DATABASE WPI Week 200131 Thomson Scientific, London, GB; AN 2001-293946 XP002528032 & JP 2000 355608 A (IDEMITSU PETROCHEM CO LTD) 26 December 2000 (2000-12-26)
- DATABASE WPI Week 199632 Thomson Scientific, London, GB; AN 1996-318977 XP002528033 & JP 08 143622 A (SHOWA DENKO KK) 4 June 1996 (1996-06-04)
- DATABASE WPI Week 197905 Thomson Scientific, London, GB; AN 1979-09169B XP002528034 & JP 53 146290 A (ASAHI CHEM IND CO LTD) 20 December 1978 (1978-12-20)

## Description

The present invention relates to catalysts for the polymerization of olefins, in particular ethylene and its mixtures with olefins CH₂=CHR, wherein R is an alkyl, cycloalkyl or aryl radical having 1-12 carbon atoms, comprising (A) a solid catalyst component comprising Ti, Mg, halogen and optionally an electron donor, (B) an aluminum alkyl compound and (C) halogenated germanium compounds as activity enhancers. The catalysts of the invention are suitably used in any olefin polymerization process to prepare olefin homo or copolymers.

The polymerization activity is a very important factor in any polymerization process. For a given catalyst system, it may depend on the polymerization conditions, such as temperature and pressure. However, once fixed the polymerization conditions the activity depends strictly on the catalyst system and when the activity is not satisfactory the amount of catalyst fed to the reactor must be increased or its residence time made longer. In any case it is clear that the above solution penalize the plant operability for the economic point of view as the increase of catalyst fed means increase of the cost per unity of polymer produced, while the increase of the residence time means a lower productivity of the plant.

In view of this importance, the need of increase the catalyst activity is always felt. The Ziegler-Natta catalyst are generally obtained by reacting an aluminum alkyl compound with a solid catalyst component comprising a magnesium halide and a titanium compound containing at least a Ti-halogen bond. As the catalyst component is responsible for both the activity and the polymer properties, once the catalyst system has been chosen for industrial production it is changed for a different one having higher activity, only if the new one maintains basically unaltered the polymer properties. This is the reason why it is needed to modify the catalyst activity of a certain catalyst system without changing its capability to produce a polymer with certain properties.

Particularly in the ethylene polymerization processes, where the catalyst system usually does not comprise external donor compounds for increasing the stereospecificity, the attempt for increasing the activity, is generally based on the use of halogenated hydrocarbon compounds as activity enhancer. Such a use is disclosed for example in USP 5, 863,995, USP 5,990,251, USP 4,657,998. The use of such compounds in addition to the activity may affect also the molecular weight distribution.

The applicant has now found a novel catalyst system for the (co)polymerization of ethylene, based on a different type of activity enhancer, comprising (A) a solid catalyst component comprising Ti, Mg, halogen, (B) an aluminum alkyl compound and (C) a halogenated germanium compound.

Preferred germanium compounds are diethylgermanium dichloride, dimethylgermanium dichloride and the germanium tetrahalides such as germanium tetrachloride, and germanium tetrabromide.

The halogenated germanium compound (C) is used in amounts such as to give a (B)/(C) molar ratio ranging from 0.1 to 100 preferably from 1 to 50 and more preferably from 5 to 30.

In a preferred aspect the catalyst component of the invention comprises a Ti compound having at least one Ti-halogen bond supported on a magnesium chloride which is preferably magnesium dichloride and more preferably magnesium dichloride in active form. In the context of the present application the term magnesium chloride means magnesium compounds having at least one magnesium chloride bond. As mentioned before, the catalyst component may also contain groups different from halogen, in any case in amounts lower than 0.5 mole for each mole of titanium and preferably lower than 0.3.

In the catalyst component of the invention the average pore radius value, for porosity due to pores up to 1 µm, is in the range from 0.06 to 0.12 µm.
The particles of solid component have substantially spherical morphology and average diameter comprised between 5 and 150 µm, preferably from 20 to 100 µm and more preferably from 30 to 90 µm. As particles having substantially spherical morphology, those are meant wherein the ratio between the greater axis and the smaller axis is equal to or lower than 1.5 and preferably lower than 1.3.

The magnesium dichloride in the active form is characterized by X-ray spectra in which the most intense diffraction line which appears in the spectrum of the non active chloride (lattice distanced of 2,56A) is diminished in intensity and is broadened to such an extent that it becomes totally or partially merged with the reflection line falling at lattice distance (d) of 2.95Å. When the merging is complete the single broad peak generated has the maximum of intensity which is shifted towards angles lower than those of the most intense line.
The solid components of the invention may comprise an electron donor compound (internal donor), selected for example among ethers, esters, amines and ketones. The electron donor compound may be used in amount such as to give ED/Ti ratios lower than 3, preferably lower than 1 and more preferably not to include any amount of electron donor compound in order for it to be absent in the final solid catalyst component (A).
The preferred titanium compounds have the formula Ti(OR^{II})ₙX_{y-n}, wherein n is a number comprised between 0 and 0.5 inclusive, y is the valence of titanium, R^{II} is an alkyl, cycloalkyl or aryl radical having 1-8 carbon atoms and X is halogen. In particular R^{II} can be ethyl, isopropyl, n-butyl, isobutyl, 2-ethylhexyl, n-octyl and phenyl, (benzyl); X is preferably chlorine.
If y is 4, n varies preferably from 0 to 0.02; if y is 3, n varies preferably from 0 to 0.015. TiCl₄ is especially preferred.
A method suitable for the preparation of spherical components mentioned above comprises a step (a) in which a compound MgCl₂.mR^{III}OH, wherein 0.3 ≤ m ≤ 1.7 and R^{III} is an alkyl, cycloalkyl or aryl radical having 1-12 carbon atoms is reacted with the said titanium compound of the formula Ti(OR^{II})ₙX_{y-n}, in which n, y, X and R^{II} have the same meaning defined above.
In this case MgCl₂.mR^{III}OH represents a precursor of Mg dihalide. These kind of compounds can generally be obtained by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034. Adducts having the desired final alcohol content can be obtained by directly using the selected amount of alcohol directly during the adduct preparation. However, if adducts with increased porosity are to be obtained it is convenient to first prepare adducts with more than 1.7 moles of alcohol per mole of MgCl₂ and then subjecting them to a thermal and/or chemical dealcoholation process. The thermal dealcoholation process is carried out in nitrogen flow at temperatures comprised between 50 and 150°C until the alcohol content is reduced to the value ranging from 0.3 to 1.7. A process of this type is described in EP 395083.
Generally these dealcoholated adducts are also characterized by a porosity (measured by mercury method) due to pores with radius due to pores with radius up to 0.1µm ranging from 0.15 to 2.5 cm³/g preferably from 0.25 to 1.5 cm³/g.
In the reaction of step (a) the molar ratio Ti/Mg is stoichiometric or higher; preferably this ratio in higher than 3. Still more preferably a large excess of titanium compound is used. Preferred titanium compounds are titanium tetrahalides, in particular TiCl₄. The reaction with the Ti compound can be carried out by suspending the adduct in cold TiCl₄ (generally 0°C); the mixture is heated up to 80-140°C and kept at this temperature for 0.5-8 preferably from 0.5 to 3 hours. The excess of titanium compound can be separated at high temperatures by filtration or sedimentation and siphoning.
The catalyst component (B) of the invention is selected from Al-alkyl compounds possibly halogenated. In particular, it is selected from Al-trialkyl compounds, for example Al-trimethyl, Al-triethyl, Al-tri-n-butyl , Al-triisobutyl are preferred. The Al/Ti ratio is higher than 1 and is generally comprised between 5 and 800.
The above-mentioned components (A)-(C) can be fed separately into the reactor where, under the polymerization conditions can exploit their activity. It may be advantageous to carry out a pre-contact of the above components, optionally in the presence of small amounts of olefins, for a period of time ranging from 0.1 to 120 minutes preferably in the range from 1 to 60 minutes. The pre-contact can be carried out in a liquid diluent at a temperature ranging from 0 to 90°C preferably in the range of 20 to 70°C.
The so formed catalyst system can be used directly in the main polymerization process or alternatively, the component (A) can be pre-polymerized beforehand. A pre-polymerization step is usually preferred when the main polymerization process is carried out in the gas phase. The prepolymerization can be carried out with any of the olefins CH₂=CHR, where R is H or a C1-C10 hydrocarbon group. In particular, it is especially preferred to prepolymerize ethylene, propylene or mixtures thereof with one or more α-olefins, said mixtures containing up to 20% in moles of α-olefin, forming amounts of polymer from about 0.1 g per gram of solid component up to about 1000 g per gram of solid catalyst component. The pre-polymerization step can be carried out at temperatures from 0 to 80°C, preferably from 5 to 70°C, in the liquid or gas phase. The pre-polymerization step can be performed in-line as a part of a continuous polymerization process or separately in a batch process. The batch pre-polymerization of the component (A) in the presence of the component (C) of the invention with propylene in order to produce an amount of polymer ranging from 0.5 to 20 g per gram of catalyst component is particularly preferred. The prepolymerized catalyst component can also be subject to a further treatment with a titanium compound before being used in the main polymerization step. In this case the use of TiCl₄ is particularly preferred. The reaction with the Ti compound can be carried out by suspending the prepolymerized catalyst component in the liquid Ti compound optionally in mixture with a liquid diluent; the mixture is heated to 60-120°C and kept at this temperature for 0.5-2 hours.

The catalyst system of the invention can be used in any kind of polymerization process both in liquid and gas-phase processes. Catalysts having small particle size, (less than 40µm) are particularly suited for slurry polymerization in an inert medium, which can be carried out continuously stirred tank reactor or in loop reactors. Catalysts having larger particle size are particularly suited for gas-phase polymerization processes which can be carried out in agitated or fluidized bed gas-phase reactors.

As already mentioned, the catalysts of the present invention show a high polymerization activity in the (co)polymerization of ethylene.
In addition, to the ethylene homo and copolymers mentioned above the catalysts of the present invention are also suitable for preparing very-low-density and ultra-low-density polyethylenes (VLDPE and ULDPE, having a density lower than 0.920g/cm³, to 0.880 g/cm³) consisting of copolymers of ethylene with one or more alpha-olefins having from 3 to 12 carbon atoms, having a mole content of units derived from ethylene of higher than 80%; elastomeric copolymers of ethylene and propylene and elastomeric terpolymers of ethylene and propylene with smaller proportions of a diene having a content by weight of units derived from ethylene ranging from 30 and 70%. The following examples are given in order to further describe the present invention.

### CHARACTERIZATION

The properties are determined according to the following methods:

### General procedure for the HDPE polymerization test

Into a 1.5 liters stainless steel autoclave, degassed under N₂ stream at 70 °C, 500 ml of anhydrous hexane, the catalyst component, 1.8 mol of triethylaluminum (TEA) and the reported amount of Ge compound were introduced. The mixture was stirred, heated to 75°C and thereafter 3 bar of H₂ and 7 bar of ethylene were fed. The polymerization lasted 2 hours. Ethylene was fed to keep the pressure constant. At the end, the reactor was depressurized and the polymer thus recovered was dried under vacuum at 70 °C.

### EXAMPLE 1-4 and Comparison Example 1

### Preparation of the solid component (A)

A magnesium chloride and alcohol adduct containing about 3 mols of alcohol was prepared following the method described in example 2 of USP 4,399,054, but working at 2000 RPM instead of 10000 RPM. The adduct were subject to a thermal treatment, under nitrogen stream, over a temperature range of 50-150 °C until a weight content of 25% of alcohol was reached.
Into a 2 L four-necked round flask, purged with nitrogen, 1 L of TiCl₄ was introduced at 0°C. Then, at the same temperature, 70 g of a spherical MgCl₂/EtOH adduct containing 25 %wt of ethanol and prepared as described above were added under stirring. The temperature was raised to 140 °C in 2 h and maintained for 60 min. Then, the stirring was discontinued, the solid product was allowed to settle and the supernatant liquid was siphoned off. The solid residue was then washed once with heptane at 80°C and five times with hexane at 25°C and dried under vacuum at 30 °C and analyzed. Into a 260cm³ glass reactor provided with stirrer, 351.5 cm³ of hexane at 20°C and whilst stirring 7 g of the catalyst prepared as above described were introduced at 20°C. Keeping constant the internal temperature, 5.6 cm³ of tri-n-octylaluminum (TNOA) in hexane (about 370 g/l) were slowly introduced into the reactor and the temperature was brought to 10°C. After 10 minutes stirring, 10 g of propylene were carefully introduced into the reactor at the same temperature during a time of 4 hours. The consumption of propylene in the reactor was monitored and the polymerization was discontinued when a theoretical conversion of 1 g of polymer per g of catalyst was deemed to be reached. Then, the whole content was filtered and washed three times with hexane at a temperature of 20°C (50 g/l). After drying the resulting prepolymerized catalyst (A) was analyzed and found to contain 1.1 g of polypropylene per g of catalyst.
The pre-polymerized solid catalyst component (A) was employed in the ethylene polymerization according to the general procedure using the type and amount of germanium compound (C) reported in table 1 together with the polymerization results.

**TABLE 1**

| EX. | Comp. C | AlR₃/Ge | Activity | MIE |
|---|---|---|---|---|
| | | ^{(mol ratio)} | (g/g) | |
| 1 | GeCl₄ | 4.5 | 45000 | 0.7 |
| 2 | Me₂GeCl₂ | 4.5 | 22300 | 0.72 |
| 3 | GeBr₄ | 4.5 | 32000 | 3.49 |
| 4 | GeCl₄ | 6.7 | 43000 | 0.98 |
| Comp. 1 | - | | 18000 | 0.55 |

## Claims

1. Catalyst system for the (co)polymerization of olefins comprising (A) a solid catalyst component comprising Ti, Mg and halogen (B) an aluminum alkyl compound and (C) a halogenated germanium compound.

2. Catalyst system according to claim 1 in which the halogenated germanium compound (C) is used in amounts such as to give a (B)/(C) molar ratio ranging from 0.1 to 100.

3. Catalyst system according to claim 2 in which the halogenated germanium compound (C) is used in amounts such as to give a (B)/(C) molar ratio ranging from 1 to 50

4. Catalyst system according to claim 1 in which the halogenated germanium compound is germanium tetrahalide.

5. Process for the preparation of olefin (co)polymer carried out by polymerizing olefins in the presence of a catalyst system comprising (A) a solid catalyst component comprising Ti, Mg and halogen (B) an aluminum alkyl compound and (C) a halogenated germanium compound.

## Patentansprüche

1. Katalysatorsystem zur (Co)-Polymerisation von Olefinen, das (A) eine feste Katalysatorkomponente, umfassend Ti, Mg und Halogen, (B) eine Aluminiumalkylverbindung und (C) eine halogenierte Germaniumverbindung umfasst.

2. Katalysatorsystem nach Anspruch 1, worin die halogenierte Germaniumverbindung (C) in solchen Mengen verwendet wird, um ein Molverhältnis von (B)/(C) im Bereich von 0,1 bis 100 zu ergeben.

3. Katalysatorsystem nach Anspruch 2, worin die halogenierte Germaniumverbindung (C) in solchen Mengen verwendet wird, um ein Molverhältnis von (B)/(C) im Bereich von 1 bis 50 zu ergeben.

4. Katalysatorsystem nach Anspruch 1, worin die halogenierte Germaniumverbindung Germaniumtetrahalogenid ist.

5. Verfahren zur Herstellung von Olefin-(Co)-Polymer, das durch Polymerisation von Olefinen bei Vorliegen eines Katalysatorsystems durchgeführt wird, das (A) eine feste Katalysatorkomponente, umfassend Ti, Mg und Halogen, (B) eine Aluminiumalkylverbindung und (C) eine halogenierte Germaniumverbindung umfasst.

## Revendications

1. Système de catalyseur pour la (co)polymérisation d'oléfines comprenant (A) un composant de catalyseur solide comprenant Ti, Mg et halogène, (B) un composé d'alkylaluminium et (C) un composé de germanium halogéné.

2. Système de catalyseur selon la revendication 1, dans lequel le composé de germanium halogéné (C) est utilisé en des quantités telles qu'elles donnent un rapport molaire (B)/(C) se situant dans la plage de 0,1 à 100.

3. Système de catalyseur selon la revendication 2, dans lequel le composé de germanium halogéné (C) est utilisé en des quantités telles qu'elles donnent un rapport molaire (B)/(C) se situant dans la plage de 1 à 50.

4. Système de catalyseur selon la revendication 1, dans lequel le composé de germanium halogéné est un tétrahalogénure de germanium.

5. Procédé pour la préparation de (co)polymère oléfinique réalisé en polymérisant des oléfines en présence d'un système de catalyseur comprenant (A) un composant de catalyseur solide comprenant Ti, Mg et halogène, (B) un composé d'alkylaluminium et (C) un composé de germanium halogéné.
